# EUROPEAN PATENT APPLICATION

(11) **EP 1 037 478 A1**
(43) Date of publication of application: **20.09.2000**
(21) Application number: 99104097.3
(22) Date of filing: 18.03.1999
(51) Int. Cl.: H04Q 7/20

(54) **Cellular communication network architecture for fixed subscribers**

(71) Applicant: Telefonaktiebolaget L M Ericsson (Publ), 126 25 Stockholm (SE)
(72) Inventor: Hallenstal, Magnus, 187 50 Täby (SE); Sjölund, Jan, 132 37 Saltsjö-Boo (SE); Öhman, Peter, 182 45 Enebyberg (SE); Carlsson, Hans Magnus, 126 38 Hägersten (SE); Boman, Lars Roland Mikael, 52062 Aachen (DE)
(74) Representative: HOFFMANN - EITLE

(57) **Abstract**

To provide an integrated network infrastructure such that fixed and mobile subsribers are provided with the same typ of services an access apparatus to establish access for fixed subscribers to digital cellular communication networks comprises a fixed/mobile access means (46) adapted to convert mobile-type messages (DTAP) transmitted from a mobile switching centre (MSC) in the digital cellular communication network (GSM) into fixed-type signalling for fixed subscribers (12)and vice versa, and a telephone number setup means (DANA) adapted to collect and analyze telephone number digits received from fixed subscribers before forwarding to the mobile switching centre (MSC) in the digital cellular communication network (GSM) for indication of the service to be activated/invoked. Therefore, according to the present invention it is possible to implement a fixed/mobile conversion with minimum or no impact to existing network components.

## Description

### FIELD OF THE INVENTION

The present invention relates to a digital cellular communication network architecture, and in particular to a digital cellular communication network architecture that also handles fixed subscribers.

### BACKGROUND OF INVENTION

Digital cellular communication or telecommunication networks meanwhile are in common use. One example for such a digital cellular communication network is the pan-European mobile communication network GSM for which technical specifications have been elaborated by the European Telecommunication Standards Institute ETSI. Digital cellular communication networks allow its users to initiate and receive calls at any geographical area within the radio coverage of the Home Public Land Mobile Network HPLMN operated by the network operator selected by the subscriber and also within the radio coverage area of partners of the network operator providing services within the Home Public Land Mobile Network HPLMN, i.e. network operators having a roaming agreement with the HPLMN-network operator.

Basic sub-systems for the architecture of such a digital cellular communication network are to establish the services within a PLMN service area, i.e. a Base Station Sub-System BSS, a Network and Switching Sub-System NSS and an Operational Sub-System OSS. The Base Station Sub-System BSS provides and manages transmission paths between Mobile Stations MS and the Network and Switching Sub-System NSS. The Network and Switching Sub-System NSS manages communications and connections to Mobile Stations MS. There exists no direct contact between the Base Station Sub-System BSS and external networks, e.g., a Public Switched Telephone Network PSTN an Integrated Services Digital Network ISDN, or a Packet Switched Public Data Network PSPDN. While the Mobile Station MS, the Base Station Sub-System BSS, and the Network and Switching Sub-System NSS form the operational part of the digital cellular communication network, the Operational Sub-System OSS provides means for a service provider for their control.

Therefore, in a digital cellular communication network interaction between sub-systems can be grouped into two main parts, i.e. the operational part via the external networks/GSM service area to the Network and Switching Sub-System NSS, the Base Station Sub-System BSS, the Mobile Station MS to the user and the control part where the service provider directly accesses the Operational Sub-System OSS.

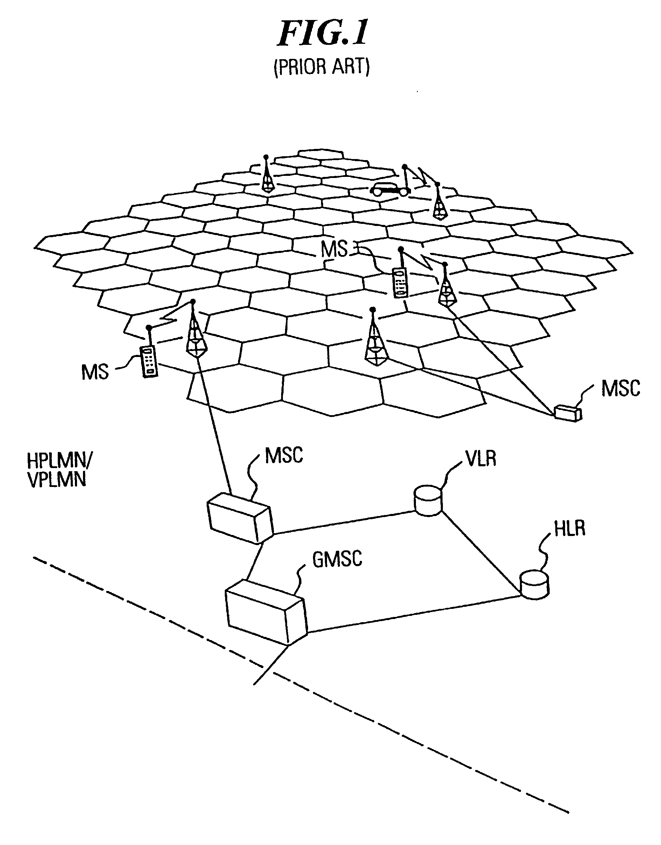

Fig. 1 shows typical components of the digital cellular communication network being related to the Network and Switching Sub-System NSS and the Base Station Sub-System BSS and the Mobile Station MS, respectively. In particular, Fig. 1 shows a Public Land Mobile Network PLMN that may either be the Home Public Land Mobile Network HPLMN or the Visiting Public Land Mobile Network VPLMN of a subscriber.

To achieve a link between two different PLMN service areas there is provided a Gateway Mobile Service Switching Centre GMSC that serves to determine specific locations of a Mobile Station MS in the digital cellular communication network and to route incoming calls towards a Mobile Station MS. In addition, an even more important task of the Gateway Mobile Service Switching Centre GMSC is to connect to other networks. For a GSM internal call no Gateway Mobile Service Switching Centre GMSC needs to be invoked.

The Gateway Mobile Service Switching Centre GMSC is connected to a functional unit called Home Location Register HLR wherein two types of information are stored: subscriber information and mobile information to allow incoming calls to be routed to the Mobile Station MS. Any administrative action by the network operator with respect to mobile station data is carried out in the Home Location Register HLR.

To route a call to a Mobile Station MS the Gateway Mobile Service Switching Centre GMSC is also connected to a Mobile Service Switching Centre MSC through which the Mobile Station MS can obtain a service. The Mobile Service Switching Centre MSC performs the necessary switching functions required for Mobile Stations MS covered by this Mobile Service Switching Centre MSC. Also, the Mobile Service Switching Centre MSC monitors the mobility of its Mobile Stations MS and manages necessary resources required to handle and update the location registration procedures.

As outlined above and shown in Fig. 1 the Public Land Mobile Network HPLMN/VPLMN comprises a plurality of Mobile Service Switching Centres MSC and respective service areas each covering a predetermined number of basic cells wherein a Mobile Station MS can move. To this end, each Mobile Service Switching Centre MSC is connected to a Visitor Location Register VLR. The Visitor Location Register VLR is a functional unit that dynamically stores mobile station information, such as the location area in case the mobile station is located in the service area covered by the Visitor Location Register VLR. When a roaming Mobile Station MS enters a service area assigned to a specific Mobile Service Switching Centre MSC the Mobile Service Switching Centre MSC informs the associated Visitor Location Register VLR about the Mobile Station MS.

In addition, the Base Station Sub-System BSS corresponds to physical equipment providing radio coverage to the above-mentioned cells which are approximately hexagonal geographical regions in Fig. 1. Each Base Station Sub-System BSS contains equipment required to communicate with the Mobile Station MS.

Using the architecture of the digital cellular communication network outlined above, there may be provided a group of communication capabilities to the subscribers. The basic communication services provided in the GSM digital cellular communication network are divided into three main groups: bearer services, teleservices, ANd supplementary services.

The bearer services give the Mobile Station MS the capacity required to transmit appropriate signals between certain user network interfaces such as data services, alternate speech/data, speech followed by data, clear 3.1 kHz audio service and support of automatic request for retransmission technique for improved error rates.

The teleservices provide the Mobile Station MS with necessary capabilities including terminal equipment functions to communicate with other mobile stations, e.g., short message services, or message handling and storage services.

Finally, supplementary services modify or supplement basic telecommunication services and are provided with or in association with the basic teleservices. Such supplementary services comprise, e.g., number identification services, call offering services, call completion services, multiparty services, or call restriction services.

In addition, due to the onging developments in the field of digital cellular communication networks, currently there may be observed a trend for voice telephony traffic to move to the mobile network. I.e. in other words, the expectations of fixed subscribers gradually move to services offered through mobile network operators.

In addition, another aspect gaining importance is fixed/mobile convergence. The fixed/mobile convergence may be seen as, e.g., mobile and fixed applications running in the same node or otherwise some common services for fixed and mobile subscribers.

The fixed/mobile convergence is particularily important in network expansion markets where initial investments must be kept low so that mobile communication networks are to be preferred.

Another advantage of the fixed/mobile convergence would be possibilities to use consistently compressed voice for the trANsmission from end terminal to end terminal, instead of a re-coding to 64 kbit/s according to PCM.

Still another advantage of the fixed/mobile convergence would be the option for interessting new services, e.g., giving subscribers the possibility to lease mobile phones when roaming abroad and herethrough the option to be reachable under their home numbers.

Nevertheless, no efficient approaches to realize the advantages outlined above are available at the time being.

The ISDN system described in WO 92/08290 provides mobile services to mobile terminals from an ISDN interface. Here, the ISDN interface forms part of a resource controller that is implemented in a gateway fashion so that the mobile network architecture and the cellular network architecture remain fully seperated.

Further EP 0 462 727 A2 relates to mobile communication with a mobile subscriber roaming into different areas covered by different fixed base locations. In particular, at specific sites calls addressed to him are routed via a base station controller of a personal communication network PCN. However, the approach discribed in EP 0 462 727 A2, too, does not allow for a fixed/mobile convergence as only mobile subscribers are considered.

### SUMMARY OF THE INVENTION

In view of the above the object of the invention is to provide an integrated network infrastructure such that fixed and mobile subsribers are provided with the same typ of services.

According to the present invention this object is achieved through an access apparatus having the features of claim 1.

Therefore, according to the present invention it is possible to implement a fixed/mobile conversion with minimum or no impact to existing network components, e.g., mobile switching centers or home location register. Also, the inventive concept allows for the use of existing terminal equipment such that the access apparatus may be connected to any digital cellular communication network irrespective of the vendor of the digital cellular communication network.

Yet another advantage of the access node according to the present invention is that a fixed termination is much more secure and reliable than a mobile base. Also, e.g., a fixed PSTN terminal is significantly cheaper than a mobile terminal, by at least an order of magnitude.

According to a preferred embodiment of the present invention the access apparatus further comprises fixed/mobile access maintenance means for a simpler and effective administration of fixed subscribers to a digital cellular mobile communication network using, e.g., a subscriber data base and related access tools.

According to yet another preferred embodiment of the inventive access apparatus it further comprises a fixed/mobile supplementary service means adapted to provide at least one supplementary service to the fixed subscribers. Here, typically supplementary services are provided to the fixed subscribers in the form known from, e.g., the PSTN-, the ISDN- or even the POTS-field.

Further, according to yet another preferred embodiment of the inventive access apparatus there are provided echo cancellors to remove echos generated at the fixed line used to connect the fixed subscribers to the access node. Thus, there are provided means to take care of echos which typically - due to the access of subscriber lines - are not generated in a digital cellular communication network environment.

Further, according to the present invention the object outlined above is achieved through a digital cellular communication network having the features of claim 10.

Therefore, according to the present invention it is possible to provide a fixed/mobile converged communication network using only a single network infrastructure. On top of this network infrastructure both fixed and mobile subscribers are provided with the same set of services. Also, both subscriber groups are handled in a uniform way and number portability is achieved practically for free.

### BRIEF DESCRIPTION OF THE DRAWING

In the following detailed embodiments of the present invention will be described with reference to the enclosed drawing in which:
- Fig. 1: shows typical components of a digital cellular communication system;
- Fig. 2: shows the basic concept underlying the fixed/mobile convergence achieved according to the present invention;
- Fig. 3: shows a block diagram for a mobile switching centre supporting fixed/mobile convergence according to the present invention;
- Fig. 4: shows a block diagram for an access node acoording to the present invention;
- Fig. 5: shows a detailed block diagram of the fixed/mobile access unit shown in Fig. 4;
- Fig. 6: shows the handling of echo cancellation in the fixes/converged digital cellular cmmunication network according to the present invention;
- Fig. 7: shows the handling of an originating call in a fixed/mobile convergence digital cellular network of the GSM type;
- Fig. 8: shows the handling of an terminating call in a fixed/mobile convergence digital cellular network of the GSM type;
- Fig. 9: shows the handling of a three/multiparty call in the digital cellular communication network of the GSM type;
- Fig. 10: A and B shows flow charts for subscriber procedures in a fixed/mobile converged digital cellular communication network of the GSM type; and
- Fig. 11: shows a flow chart for a subscriber registration in the fixed/mobile converged digital cellular communication network of the GSM type.

### DESCRIPTION OF PREFERRED EMBODIMENTS

In the following, embodiments of the present invention will be explained such that, initially, the overall architecture of the unified and fixed/mobile converged digital cellular communication network will be summarized. Then, the architecture and structure of FMAN fixed mobile access node or equivalently access node in short that allows fixed subscribers to hook onto the digital cellular communication network will be described in detail. Finally, different fixed/mobile convergence applications scenarios will be explained with respect to fixed originating calls, fixed terminating calls, a subscriber procedure, and a three-multiparty call, respectively.

### Cellular communication network architecture:

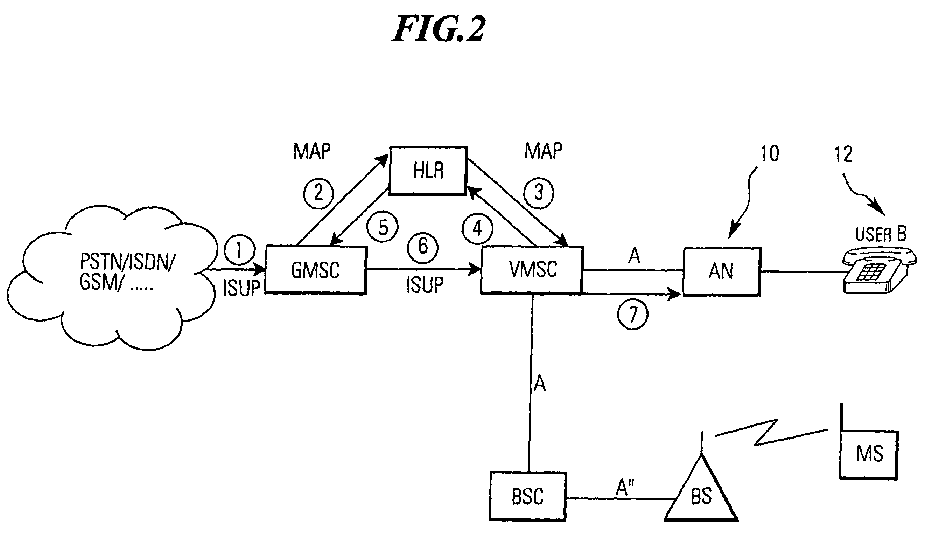

Fig. 2 shows the basic concept underlying the fixed/mobile convergence achieved with the network architecture according to the present invention.

As shown in Fig. 2, the network architecture according to the present invention differs over the network architecture described above with respect to Fig. 1 in that there is provided FMAN access node that is linked to mobile switching centre MSC, e.g., a mobile services switching centre MSC with integrated visitor location register VLR according to the GSM standard.

However, it should be noted that according to the present invention there is no restriction to a particular type of digital cellular communication network and that the embodiments to be described in the following may also be applied to the, e.g., PCS-type, the IDC/PDC-type cellular communication networks or cdmaOne systems having an A-interface specified in standard TIA IS-634, respectively.

As shown in Fig. 2, the concept underlying the present invention is that fixed subscribers are provided with exactly the same services as mobile subscribers, although without mobility which, however, can also be provided to fixed users. From a mobile switching centre point of view that means that it operates the same tools and software for services and routing for both the mobile and fixed subscribers.

Therefore, the location of fixed subscribers' subscription will be in the location data base HLR as is the case for the mobile subscribers. Further, subscriber administration is exactly the same - besides minor differences such as charging tariffs - for both, fixed and mobile subscribers.

As is also shown in Fig. 2, different alternative network interfaces may be used to connect the mobile switching centre MSC to the access node. E.g., according to the GSM-standard these interfaces could be defined according to the A-protocol, respectively. If the A-interface is chosen, adaption software needs to be developed for the access node FMAN. In this case the use of functions and data being present in the mobile switching centre and related visitor location register but not being accessible at the A-interface will not be possible at the access node FMAN such that a stripping of pure radio- and mobility-functions at the access node FMAN is not possible.

Further, the numbers ① to ⑦ shown in Fig. 2 relate to a standard call set up to fixed subscribers, e.g., explained with reference to the GSM standard.

As shown in Fig. 2, initially in step ① a call from an external net, such as PSTN/ISDN/GSM is routed to the gateway mobile service switching centre GSE for interrogation. Here, typically an ISDN user part ISUP is used as message format and the called number is that of user B.

Then, in step ② at the home location register an interrogation takes place using a mobile application part MAP protocol message indicating that sending of routing info is requested.

Then, in step ③ the home location register asks the mobile service switching centre VMSC, i.e. a MSC with integrated VLR, to provide a roaming number.

Then, in step ④ the mobile service switching centre VMSC temporarily assigns a roaming number to user B which roaming number is then sent to the home location register HLR.

Then, in step ⑤ this roaming number is provided within a routing information acknowledgment message to the gateway mobile service switching centre GMSC.

Then, in step ⑥ AN ISUP message is sent, using the roaming number as called number. The roaming number is used in the routing process so that the initialized call ends up in the mobile service centre VMSC.

Finally, in step ⑦ the mobile switching centre VMSC finds the called user B through the provided roaming number and the mobile switching centre orders A-signalling to initialize a ring signal at user B.

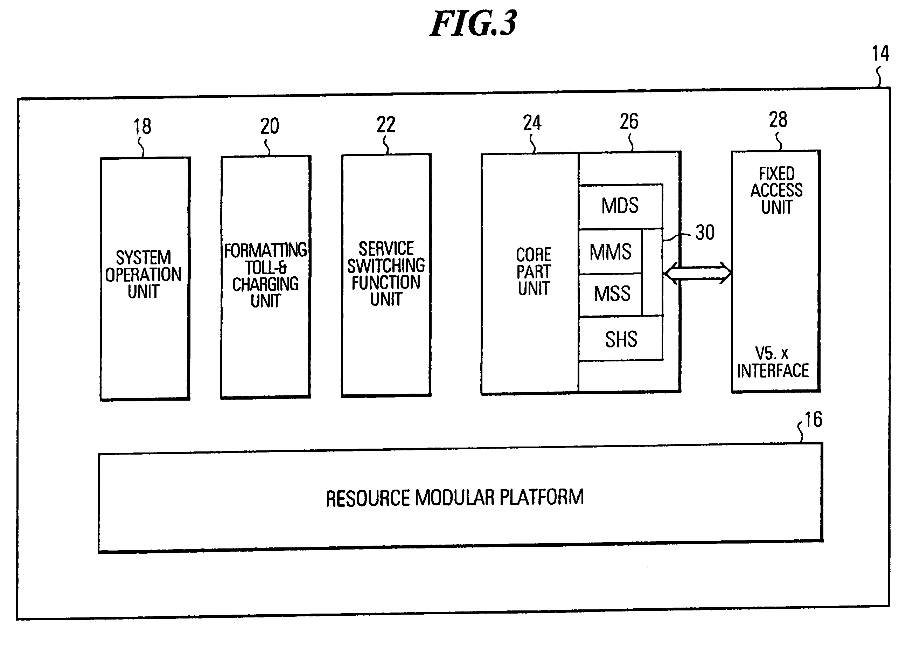

Fig. 3 shows a block diagram for a mobile switching station MSC 14 supporting fixed/mobile convergence according to the present invention.

As shown in Fig. 3, according to the present invention the implementation of the mobile switching centre MSC 14 relies on a resource module platform 16 providing modules for necessary functionalities, e.g., connection, communication, channelling, group switch, maintenance, routing, and so forth.

As also shown in Fig. 3, on top of these resource module platform 16 the mobile switching centre 14 subdivides into a system operation unit 18, a formatting, toll and charging unit 20, a service switching function unit 22, and a core part unit 24 in combination with a mobile unique subsystem 26. Further, the mobile unique subsystem 26 comprises as subcomponents the mobile data subsystem unit MDS, the mobile mobility and radio subsystem unit MMS, the mobile switching subsystem MSS and short message handling subsystem SHS. As also shown in Fig. 3, for the handling of fixed subscribers the mobile switching centre MSC in addition comprises a fixed access unit 28.

Operatively, the system operation unit 18 provides the functionality for the basic operation of the mobile service switching centre.

Further, the formatting, toll and charging unit 20 provides functionality to collect fees from the subscribers. Here, charging will be done in the same way as for mobile subscribers so that pulse metering must not be supported. To get differentiated charging according to the present invention, the following methods may be used:
- special international mobile subscriber identity IMSI number series may be used for fixed subscribers and the input of these in the IMSI analysis in the mobile switching centre MSC would lead to a special charging;
- the charging could be determined by analyzing the call originator, i.e. the A-subscribers number; and
- a further option is use of tariff areas, where a special tariff may be set on a per cell or location area basis using origin based cell IDs or location area identities LAI.

Further, operatively the service switching function unit 22 allows to switch between the different services provided to either fixed or mobile subscribers supported through the mobile switching centre MSC 14.

Still further, as shown in Fig. 3, the further core part unit 24 and mobile unique subsystem 26 relate to the actual formatting of the services determined through the service switching function unit 22 to mobile subscribers, and in addition, according to the present invention also to fixed subscribers via the fixed access unit 28. While the core part unit 24 provides basic components such as number analysis, call routing, etc., in the mobile unique subsystem unit 26 the actual handling of mobile data (MDS), mobile mobility (MMS) and mobile switching (MSS) is implemented.

Further, as shown in Fig. 3 with respect to fixed subscribers in particular the mobile mobility and radio subsystem unit MMS and the mobile switching subsystem unit MSS - when hooked onto a fixed subscriber - need to be extended through an A-adaption block 30 for the exchange of data with the fixed access unit 28.

Thus, as shown in Fig. 3 to also provide services to fixed subscribers the mobile switching centre 14 is basically extended through a fixed access unit 28 and the adaptation block 30 while the impact on the mobile switching subsystem MSS handling the basic call and services is kept to a minimum. Basically, the A-adaptation block 30 implements the transfer of data to the fixed access unit 28 with a minimum impact to the functionality implemented for mobile subscribers in the mobile switching subsystem MSS.

Still further, the fixed access unit 28 for a PSTN access operatively needs to map dual tone multiple frequency DTMF, on- and off hook and dialled digits to an ISDN type signal. E.g., operations of the fixed subscriber for controlling supplementary services will have to be translated into functional calls towards the mobile unique subsystem unit 26. In addition, further mapping functions as implemented within the fixed access unit 28 are related to map to/from access line and register signalling to/from A-interface (BSSAP) Examples of line signals are on and off hook, answer and flash, and DTMF as register signalling.

### Access node architecture:

In the following, the counterpart of the mobile switching centre 14 adapted to fixed subscribers will be explained, e.g., the structure and functionality of the fixed mobile access node FMAN 10 or equivalently access node in short already referred to above with respect to Fig. 2.

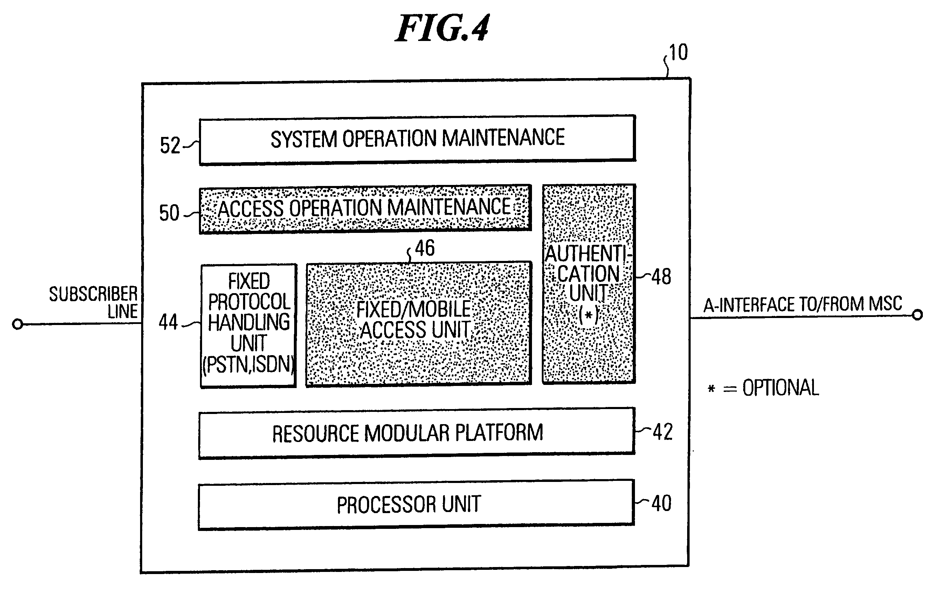

Fig. 4 shows a block diagram for the system architecture of the access node acoording to the present invention.

As shown in Fig. 4, the access node 10 is realized using a processor unit 40. A resource module forms platform that - as with respect to the mobile switching centre MSC 14 discussed with respect to Fig. 3 - provides functionality for connection, communication, channelling, group switching, maintenance and routings, and so forth. On top of the processor unit 40 and the resource module platform 42 there are then provided access node specific units in a modular form.

These modules comprise at least a fixed protocol handling unit 44, a fixed/mobile access unit 46, and authentization unit 48, an access operation maintenance unit 50, and a system operation maintenance unit 52, respectively.

As also shown in Fig. 4, those units shown transparently are mainly related either to the operation of the access node 10 itself or to the exchange of data with the fixed subscriber, while the remaining units shown in a shaded manner are provided for the exchange of data with a related mobile switching centre MSC to which the access node 10 is hooked on.

As already outlined above, the access node FMAN 10 is, e.g., implemented as stand-alone node to make it possible to connect it to equipment of a plurality of vendors. Basically, its function may be interpreted as local exchange without charging, subscriber services, routing, etc. Logically, the access node FMAN 10 may be seen as location area such as represented by a location area identity LAI, and further an access node FMAN 10 may also be represented by more than one location area identity, if necessary and wanted.

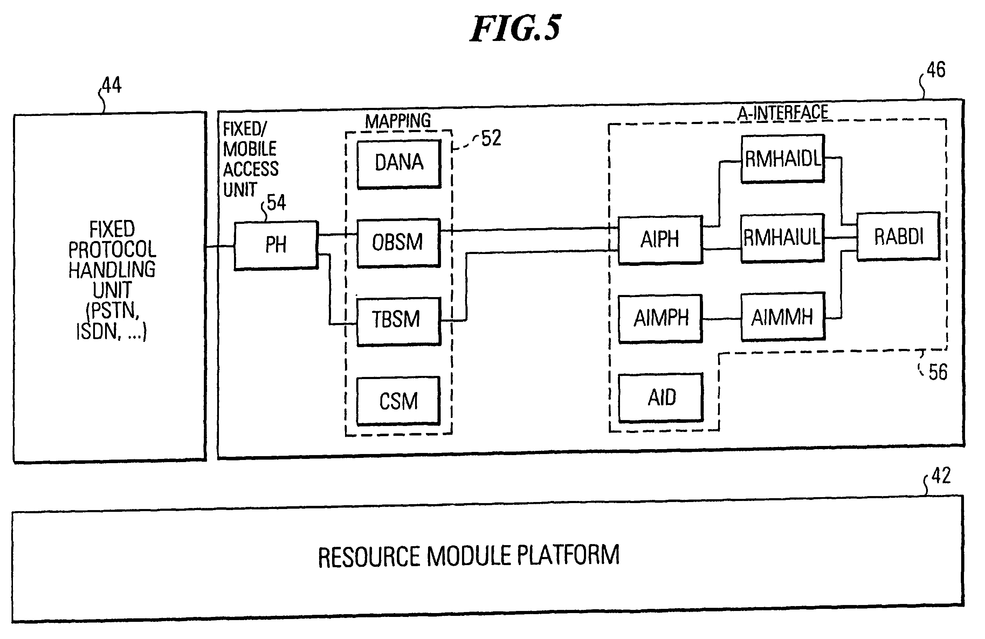

As shown in Fig. 4, the access node FMAN 10 logically divides into subscriber handling implemented into the access operation maintenance unit 50, and further authentization handling logic and ciphering logic (i.e., "ciphering response" logic to output ciphering SRES responses for authentization used within the digital cellular communication network for fixed subscribers. Other logical parts relate to fixed subscriber protocol handling implemented into the fixed protocol handling unit 44 and further to functionality mapping the fixed subscriber protocol into the digital cellular communication network, the interface into the mobile switching centre MSC, digit number analysis of telephone numbers, provision of supplementary services to fixed subscribers and so forth. This will be discussed in more detail hereinbelow with respect to Fig. 5 showing the block diagram of the fixed/mobile access unit 46 realizing these different logical functionalities. Further, as shown in Fig. 4, the system operation maintenance unit 52 allows to give support for maintenance of the generic system functions implemented into the resourece module platform 42 and so on.

Basically, each access node FMAN 10 terminates/originates a format specific for data exchange in the digital cellular communication network, e.g., the direct transfer application part DTAP used in the GSM standard. Also, telephone digit received sequentially from fixed subscribers need to be collected and some analysis of the digits is necessary before sending them to the mobile service centre MSC. Here, typically according to the GSM standard in the access node FMAN 10 the fixed subscriber is known through an international mobile subscriber identity IMSI. Also, a service provider would preferably allocate a certain IMSI number series to fixed subscribers to support, e.g., the authentization problem. Another option is that the mobile switching centre MSC 14 requests the international mobile equipment identity IMEI which, e.g., may be stored in a data base in the access node FMAN 10. Another option would be to use a common international mobile equipment identity IMEI for all fixed subscribers.

As shown in Fig. 4, the fixed protocol handling unit 44 is provided to adapt the access node FMAN 10 to a plurality of different protocols to fixed subscribers, e.g., PSTN, ISDN, and so forth, to achieve a link to a plurality of different fixed subscriber terminals.

As also shown in Fig. 4, the authentization unit 48 is optional and authentication is either done for every call to/from a fixed subscriber or less frequently. Usually, in the mobile wire a unique key per subscription is stored both in a mobile station, in particular in the subscriber identity module SIM-card comprised therein, and also in the authentication centre AUC provided for a digital cellular communication network. Here, both parts need to negociate before a call may be set up. However, in the fixed case in the access node FMAN 10 no SIM-card exists and hence there is no negociating partner for the authentication centre AUC in the digital cellular communication network. To solve this problem according to the present invention, there exist different solutions:
- Turn off authentication for fixed subscribers, e.g., through knowledge in the mobile service switching center MSC on the A-interface or via the location area indication LAI.
- Introduce an authentication centre, fixed AUCF that may be - as shown in Fig. 4 - implemented and placed in an access node FMAN 10. Typically, only a few access nodes FMAN would have an authentication centre fixed AUCF which would be made transparent to a home location register and then be seen from an HLR point of view as normal authentication centers. Another option is to place the authentication centre fixed into a mobile switching centre MSC/VLR which would then have a dummy SRES (Signal RESult), a dummy random number and a dummy ciphering key stored which will be the same for all fixed subscribers. Hence, the access node FMAN 10 will always be able to reply to the mobile switching centre MSC/VLR with a correct signal result SRES in case of interrogation.
- Direct implementation of the authentication unit into the access node FMAN 10. As this option means storing of the security keys into the access node FMAN 10 this leads to increased security requirements therefore. Also, the authentization unit may be understood as supersimplified authentization centre that is only able to handle mobility application part MAP operations connected to the access node FMAN 10 for authentization to fixed subscribers.

Further, the access operation maintenance unit 50 shown in Fig. 4 operatively maintains and modifies subscriber information. E.g., this may be achieved through a subscriber data base, command handling logic for registration/modification of a subscriber and support tools to implement these functionalities. Also, this access operation maintenance unit 50 may also comprise units dealing with A-interface devices, units to insert data into a data base storing information for digital analysis and a unit for node data administration, e.g., the location area indication LAI, etc., to be assigned to the access node FMAN 10.

Fig. 5 shows a detailed block diagram of the fixed/mobile access unit 46 shown in Fig. 4.

As shown in Fig. 5, the fixed/mobile access unit 46 subdivides into a plurality of different subunits being related to the mapping between fixed protocols and digital cellular network communication based protocols, the handling of the interface to the mobile service centre MSC, e.g., the A-interface for the GSM standard, further to the handling of different telephone digits applied through the fixed subscriber, and to the administration of fixed subscribers, respectively.

As shown in Fig. 5, the mapping from fixed protocols to digital cellular network based protocols is provided in a mapping unit 52. This mapping unit 52 divides into a unit OBSM provided for terminating basic call and supplementary services and adapted to take care of all mapping functions needed for terminating basic supplementary services. Further, a unit OBSM implements the same function for originating basic call and supplementary services and is adapted to take care of all mapping functions needed for these originating basic and supplementary services. Further, the mapping unit 52 comprises a digit analysis unit DANA adapted to identify the supplementary service in location and a call, respectively. Heretofore, the digit analysis unit DANA also referred to as telephone number set up unit collects and analyses telephone number digits received sequentially from the fixed subscribers before forwarding these digits to the mobile switching centre MSC in the digital cellular communication network GSM for indication of the service to be activated/invoked. Also, the digit analysis unit DANA may be adapted to determine the length of the submitted telephone number. Still further, the mapping unit 52 comprises a call supervision mapping unit CSM to take over control of a call when it has reached a stable speech state and to map as many supplementary service activations in the speech state.

As also shown, the link between the mapping unit 52 and the fixed protocol handling unit 44 is achieved through a protocol handler PH 54 provided to connect both units in the fixed/mobile access unit 46.

As also shown in Fig. 5, the fixed/mobile access unit 46 is an interface unit 56 provided for the exchange of data between the access node FMAN 10 and the mobile switching centre MSC 14, respectively, e.g., according to the GSM A-interface standard. This interface unit 56 sub-divides into a plurality of functional units as follows: an A-interface protocol handling means (AIPH) adapted to handle all A-interface related activities except maintenance, an A-interface maintenance means (AIMPH) adapted to handle all A-interface related maintenance activities, an A-interface device means adapted to integrate all switching terminals towards the mobile switching centre (MSC) being connected to the access apparatus, a first remote handling means (RMHAIDL) adapted to A-interface down link message disassembly, a second remote handling means (RMHAIUL) adapted to A-interface up link message assembly, an A-interface maintenance message handling means (AIMMH) adapted to assemble/disassemble maintenance related messages, and/or a common channel subsystem distribution and interface means (RABDI) adapted to distribute and interface to signalling connection control part (SCCP)

Further, call is waiting as supplementary service would be implemented as, e.g., a "call is waiting" indication sent to the access node FMAN over BSSMAP. The access node FMAN 10 maps the indication to a knock tone for fixed subscribers and in the other case when related control digits are received at the access node FMAN 10 messages will be sent to the mobile switching centre MSC.

Further supplementary services relate to unconditional or conditional call forwarding. In addition, three/multi parties services may be provided as well. In case of the plain old telephony system POTS this service should be limited to only a third party - currently POTS lacking subscriber procedures to handle more parties. Nevertheless, further procedures may be easily defined in case that more parties are to be supported also for POTS. Typical subservices for three/multi party services are hold for enquiry, hold on conference service, hold for enquiry with transfer, and full three/multi parties service which all are to be supported by BSSMAP in case of the A-interface with the service logic in the fixed/mobile mobile supplementary service unit 58.

Still further, additional services that may be integrated into the access node FMAN 10 are connections without dialling and time out, malicious call tracing, don't disturb service, absent subscriber service, and call barring services. The latter may be split according to outgoing call barring and outgoing international call barring as well as barring of incoming calls.

Still further, additional supplementary services comprise call completion to busy subscriber CCBS supported through BSSMAP, call completion and no reply also supported through BSSMAP, further advice of charge and closed user group, respectively.

### Access node architecture options:

While in the above the access node has been described as being embodied as stand-alone node, of course, the functionality thereof may be ported to a mobile switching centre MSC/VLR. As the signalling between the access node FMAN and the mobile switching centre MCS is via the SCCP, this could still be the case in a combined node.

Further, according to the present invention it is also possible to port the access node FMAN 10 to existing local exchanges, in particular in case operators are running both fixed and mobile networks.

Here, an option is to include a fixed/mobile access service unit into existing local exchanges so that the system operation maintenance part would be covered through the related functionality in the local exchanges.

Still further, the architecture discussed above is easily adaptable to any standard for fixed/mobile convergence supported fixed access in digital cellular communication networks. Typical improvements to existing interfaces within these standards could be to achieve a digit-by-digit sending on the A-interface and further new MAP operations for fixed subscribers dealing with authentization and related services.

### Fixed/mobile convergence application scenarios:

In the following, typical applications scenarios for the fixed/mobile convergence achieved through the connection of the access node FMAN 10 to a mobile switching centre 14 in a digital cellular communication network will be discussed.

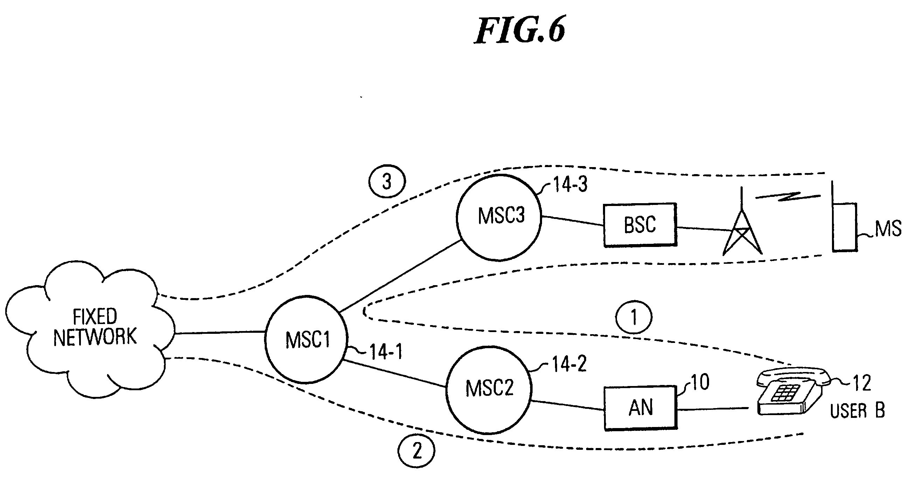

Fig. 6 illustrates a first scenario being related to the generation of echos on subscriber lines leading to the access node FMAN 10 which itself is hooked on to at least one mobile switching centre MSC 14-2. Usually, stand-alone digital cellular communication networks echo cancellors EC are always needed due to delays in digital compression algorithms. In a pure mobile-to-mobile call echo cancellation will not be provided through the digital cellular network but instead the mobile station MS has an inbuilt echo cancellation which is used for all speech calls.

As also shown in Fig. 6, for calls between a fixed network and a digital cellular network, referred to by ② and ③, the digital cellular network will insert echo cancellors to remove the echo generated at the fixed lines. Further, if the fixed network is able to provide echo cancellors, another option is that no echo cancellor is connected in the digital cellular communication network except the one in the mobile stations.

In particular, as shown in Fig. 3, connection ③ would work as normal and connection ② would get an echo cancellor included between the mobile station MSC 1 14-1 and the fixed network. This echo cancellor may nevertheless be omitted in case the delay along this connection ② is low.

However, connection ① is a problem since typically no echo cancellation control procedures are provided for on the air interface, e.g., the A-interface according to the GSM standard, which means that the mobile switching centre MSC 14-2 would implicitly assume that an echo cancellor is included as it assumes to be hooked onto a mobile station having an echo cancellor comprised therein.

However, in case of the fixed subscriber B solutions to this problem according to the present invention may be as follows:
- there are always echo cancellation devices provided in the access node FMAN 10 which will always be connected for all calls; or
- routing analysis in the mobile switching centre B used to identify that an echo cancellor EC is to be included depending on destination or origin of the call.

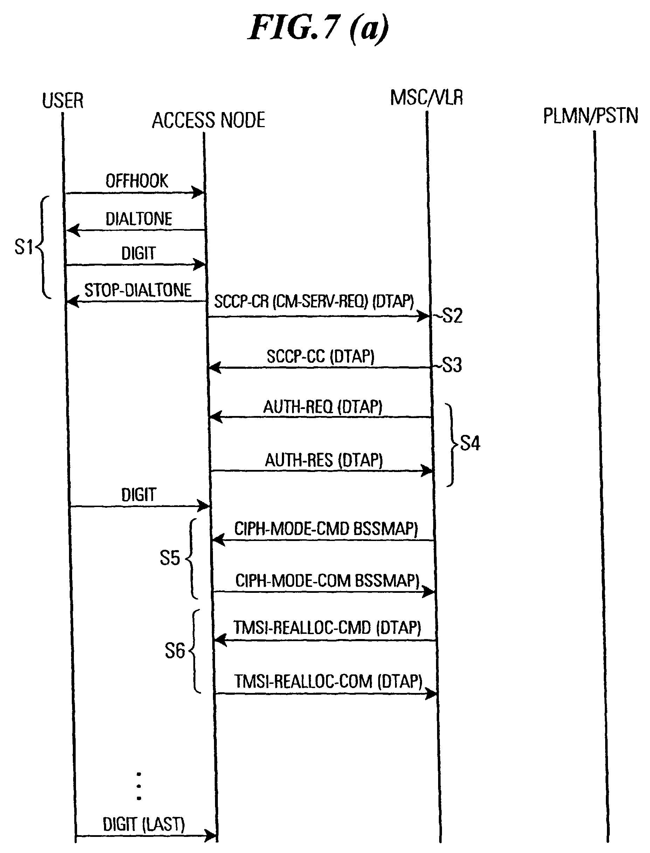

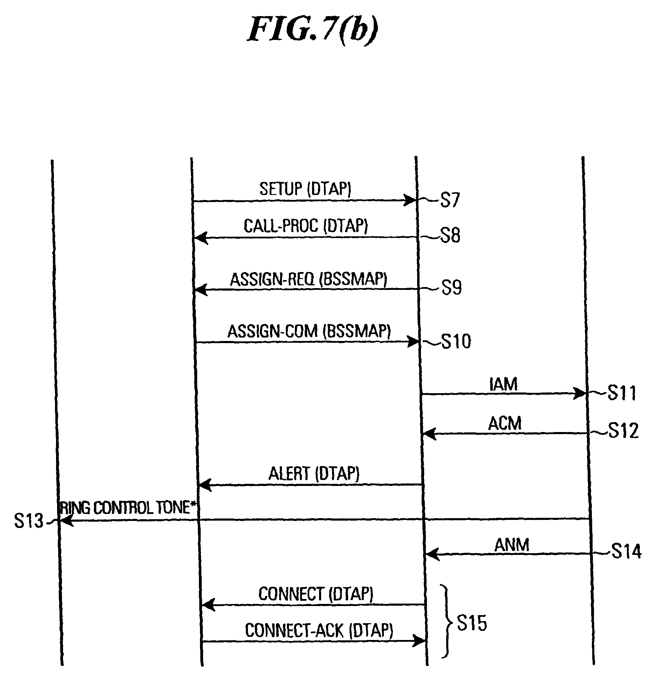

With respect to Figs. 7 to 11 further application scenarios for fixed/mobile converged digital cellular communication networks are described. They relate to the particular handling of different calls, e.g., originating call, terminating call, further to the general mechanism for a subscriber procedure and a three/multi party call, respectively.

Fig. 7 relates to the first case, i.e. the handling of an originating call in a fixed/mobile convergence digital cellular network of the GSM type according to the present invention.

Here, as shown in step S1, first digits must be received before the connection management service request CM-SERV-REQ request according to the direct transfer application part protocol DTAP may be sent as it contains information regarding normal call and subscriber procedure. After the stop dial tone the request is transmitted to the mobile station switching centre, in step S2 followed by confirmation in step S3 and authentization in step S4. Here, authentization can either be turned off in a mobile switching centre MSC or responded to from the access node FMAN. Another option is that the authentization in the home location register generates "the same" authentization information for all fixed lines.

As also shown in Fig. 7, an access node FMAN in step S5 may either ignore ciphering through returning a positive response or this ciphering can otherwise be turned off in the mobile switching centre.

Further, a TMSI/IMSI subscriber translation may possibly be required according to step S6. Again, the mobile switching centre MSC may eventually turn off this translation requirement.

As also shown in Fig. 7, a combination of timer and/or number indication is needed due to the unknown number length, before a set-up is sent to the mobile switching center or, in other words, all number digits must be received before initialization of this set up. What follows is an exchange of ISDN message coding between the access node FMAN 10 and the mobile switching centre MSC according to step S8 to S10. Here, the bearer capability is set to "speech" only in step S8. Also, the assign message is exchanged in steps S9 and S10, respectively, to indicate where the through connection is to be done along the backwards direction.

Then, exchange of information follows in the steps S11 and S12 between the mobile switching centre and the PLMN/PSTN network, e.g., on the basis of the SS7 protocol to investigate echo cancellation handling needs using, e.g., a routing analysis, as outlined above. In particular, this may be achieved by investigating, e.g., what is included in the initial address message IAM. Alternatively, echo cancellation handling could also be achieved either implicitly or on IMSI/TMSI discrimination, further through additional parameters in the A-interface and/or new route data parameters to be processed in the mobile switching centre. Anyway, in step S12 an address complete message according to the SS7 protocol is transferred to the mobile switching centre in case of acceptance.

Finally, in step S13 a ring control tone is generated in the terminating network and further answer message ANM is transmitted in step S14. In step S15 the actual connection between the access node FMAN and the mobile switching centre MSC is finally established.

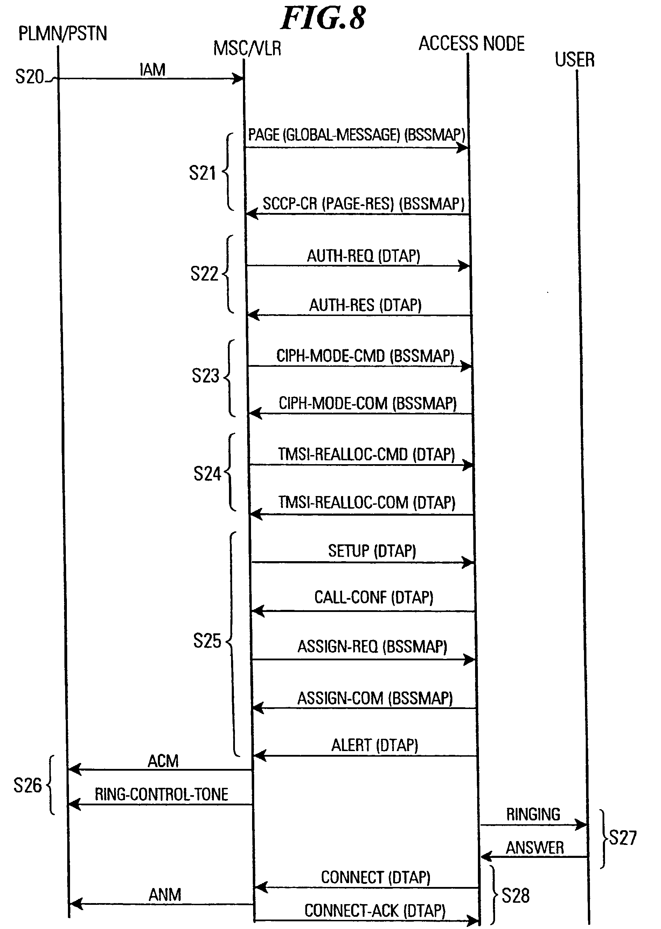

Fig. 8 relates to a terminating call in a fixed/mobile converged digital cellular communication network as further application scenario.

As shown in Fig. 8, the basic philosophy is to align with the mobile functionality and to leave the mobile switching centre as it is illustrated in Fig. 7.

Initially in step S20 an initial address message according to the SS7 protocol is transmitted from the PLMN/PSTN to the mobile switching centre VLR. As with the originating call procedure an authentization may partly be turned off in the mobile switching centre MSC.

As also shown in Fig. 8, according to step S21 a paging mechanism takes place to search a subscriber in a digital cellular mobile network. Here, e.g., the local area indication LAI is set by exchange data and one option is to have one local area indication LAI per access node EMAN or more than one location area indication LAI per access node.

What follows in step S22 and S23 is authentization and ciphering, e.g., according to the usual GSM standard such that the access node FMAN will either ignore ciphering or return a positive response. Alternatively, ciphering could be turned off in the mobile switching centre.

Hereafter, a TMSI/IMSI translation may be possibly executed in step S24, if required. Alternatively, it may be turned off in the mobile switching centre. Typically, the TMSI reallocation is not sent for every call but only in case a new TMSI is needed.

As also shown in Fig. 8, in step S25 follows the normal call processing to define the communication channel rate. What follows next is the acknowledgment and ring control tone in step S26, further the ringing at the B-user in step S27 and finally the connection of the mobile switching center in the access node FMAN in step S28 according to the data rate specified in step S25.

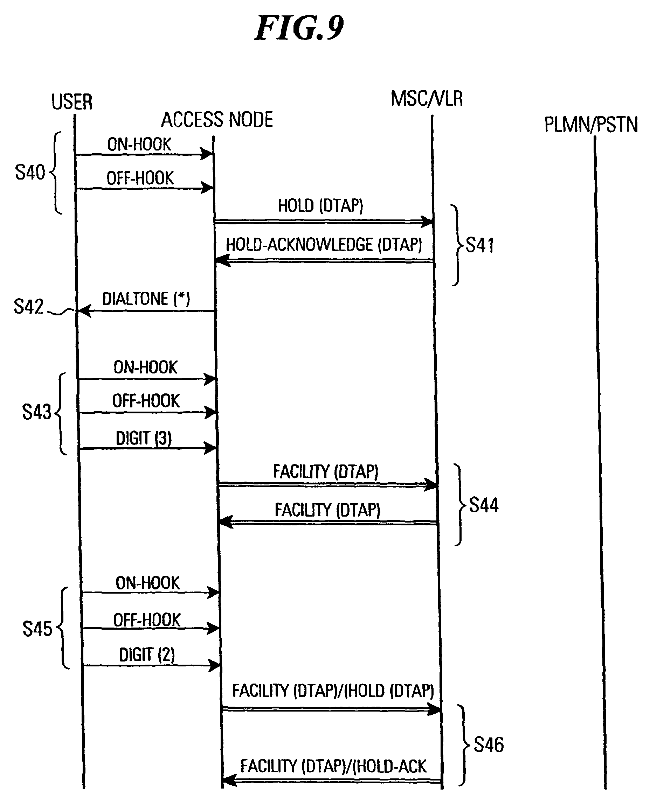

Fig. 9 relates to a three/multi party call as further application scenario in the digital cellular communication network according to the present invention.

As shown in Fig. 9, a call towards a B1-subscriber is established according to the basic originating or terminating call sequence illustrated with respect to Fig. 7 and 8, respectively, when the call is in a stable speech state.

In step S40 the subscriber activates the R (recall) button. Then, in step S41 the access node FMAN 10 places call 1 into the hold state.

As shown in Fig. 9, what follows is a provision of a normal dial tone to the A-subscriber in step S42. Then, the call to the next or second B2-subscriber is established as basic originating call and reaches finally a stable speech state. In step S43 the A-subscriber dials to set up the connection to the third/next subscriber B2.

In step S44 the access node FMAN sends a facility message with "build multiparty terminal". In case the request is accepted in the mobile switching centre a multiparty connection is set up by the mobile switching centre. The physical speech path is splitted by the conference call device CCD in the mobile switching center MSC. In order to release the multi party call in step S55 the A-subscriber dials an "R" (recall/flash) followed by digit "2" which represents a switching order (the order "2" means put one leg on hold, i.e. R2 is used to swap from one party to another), then the access node FMAN analyses the digits and sends a "split multiparty" message in step 46 to the mobile switching centre that then accepts the request with the corresponding facility message.

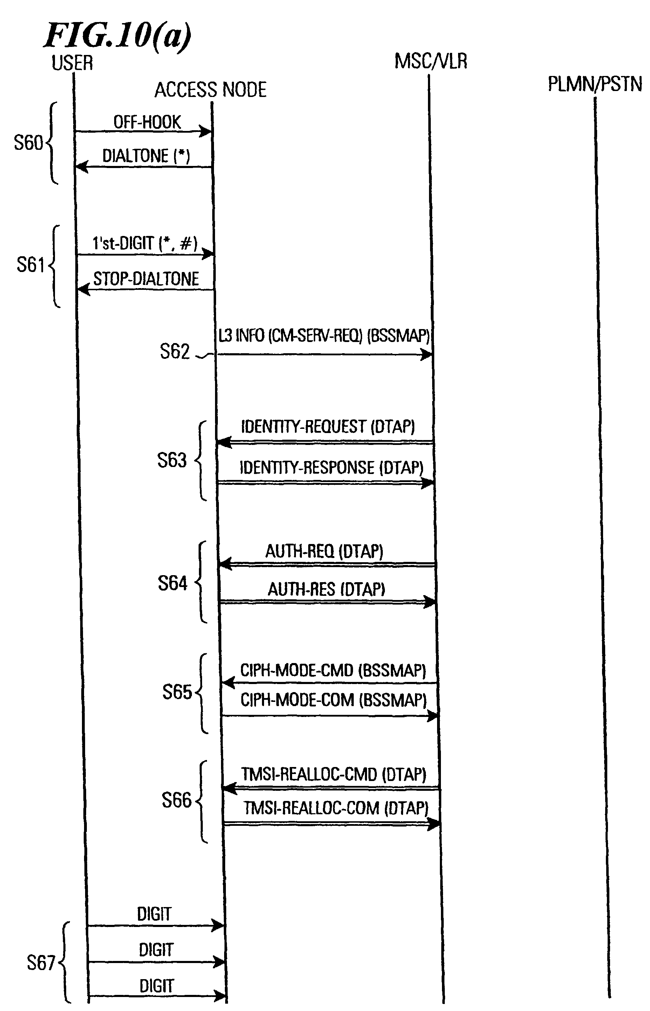

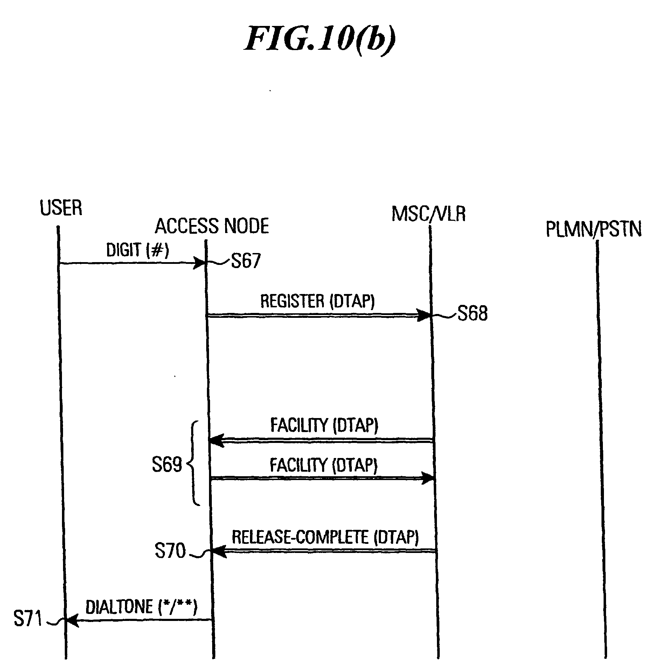

Figs. 10A and 10B show flowcharts according to subscriber procedures as further application scenario within a fixed/mobile converged digital cellular communication network according to the present invention.

As shown in Fig. 10A, one of the subscriber procedures is related to B-number analysis. Here, after receiving the first dial tone from the access node FMAN in step 61 a simple B-number analysis in the access node FMAN recognizes on the basis of the first dialled digit that this will be a subscriber procedure and invokes the logic to handle subscriber procedures.

Further, in step S62 the access node FMAN indicates "supplementary service activation" as CM-service type message in the form of a CM-service request. What follows is an identity request in step S63 in case the supplied TMSI is unknown, and authentization in step S64 - if not turned off in the mobile switching centre MSC, further a ciphering in step S65 - in case ciphering is to be done -, and TMSI reallocation step S66, if necessary.

As also shown in Fig.10A, the access node FMAN will then handle the digit reception in parallel with the previous signalling.

Here, according to step S67 a combination of timer and end of number indication is needed in case of unknown number length until the last digit is received. Only then a register message is sent to the mobile switching center MSC in step S68 to assign the new transaction ID and register the requested service.

Further, in step S69 some facility messages may be exchanged in case this is necessary for the invoked supplementary service and related transactions.

Finally, in step S70 the transaction is released and then in step S71 an acceptance tone, e.g., the dial tone for the active → change dial tone is provided to the user to indicate that the operation has been successfully performed.

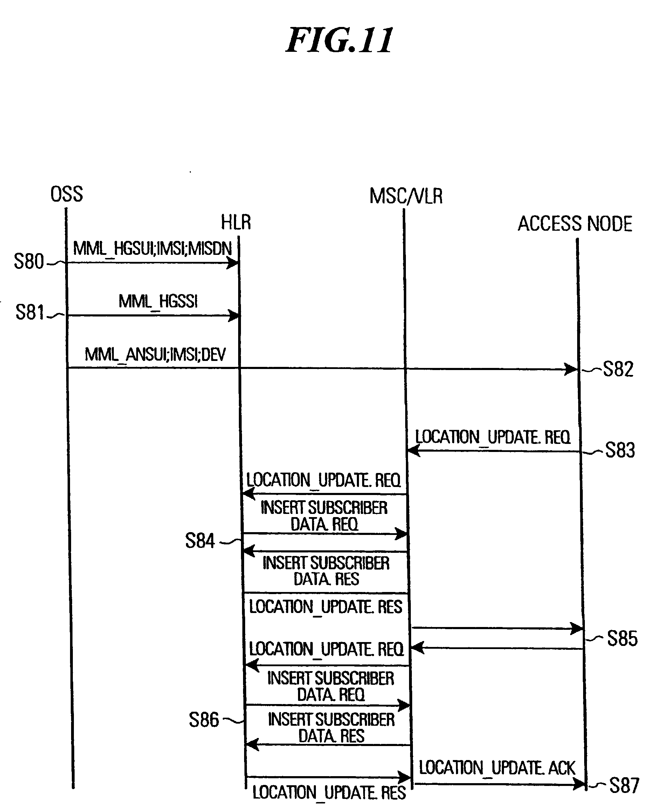

Fig. 11 shows a flowchart for subscriber registration according as further application scenario in the fixed/mobile converged digital cellular communication network according to the present invention.

As shown in Fig. 11, in step S80 the subscriber is inserted into the home location register using the OSS-subsystem. Further, in step S81 supplementary services are added, if wanted. In step S82 the access node receives instructions to insert the subscriber whereupon the access node will execute a location update towards the mobile switching center/VLSR via BBSMAP in step S83.

Further, in steps S84 and S85, respectively, authentization and ciphering actions may be executed according to the flowcharts for the terminating and originating calls summarized above with respect to Fig. 6 ANd 7, respectively.

Finally, in step S86 a location update using the MAP protocol is handled between the home location register HLR and the mobile switching centre MSC which is then accepted through the access node FMAN in step S87.

In conclusion, while embodiments of this invention relate to GSM type digital cellular communication networks they may as well applied to any kind of digital cellular communication network, e.g., according to the PDC-standard or the IDC/PDC-standard, respectively.

Further, all the features disclosed in this specification (including any accompanying claims and drawings) and/or all the steps of any method or process so disclosed may be combined in any combination, except of combinations where at least some of such features and/or steps are mutually exclusive.

Further, each feature disclosed in this specification including any accompanying claims and drawings may be replaced by alternative features serving the same, equivalent or similar purpose unless expressively stated otherwise. Thus, unless expressively stated otherwise each feature disclosed in the embodiments is one example only of the generic series of equivalent or similar features.

Further, the present invention is not restricted to the details of the foregoing embodiments. The invention also extends to any novel one or any novel combination of the features disclosed in this specification or to any novel one or to any novel combination of the steps of any method or process so disclosed.

### ABBREVIATIONS

- A-i/f: A-interface as BSSAP signalling interface between BSC and MSC in GSM
- AN: Access node
- AUC: Authentication centre
- AUCF: Authentication centre for fixed subscribers
- BSC: Base station controller
- BSSAP: Base station system application part, the control protocol on the A-interface, BSSAP = BSSMAP + DTAP
- BSSMAP: Base station system management application part, the signalling protocol between BSC and MSC and one of the components of the BSSAP
- DTAP: Direct transfer application part, i.e. the signalling protocol that goes through BSC to MS and one of the components of BSSAP
- EC: Echo canceller
- GSM: Global system for mobile communication
- HLR: Home location register
- IMEI: International mobile equipment identity
- IMSI: International mobile subscriber identity
- LAI: Location area identity
- MAP: Mobility application part, i.e. the signalling protocol used between MSC and HLR
- MCID: Malicious call identification function or equivalently malicious call tracing
- MDS: Mobile data subsystem
- MMS: Mobile mobility and radio subsystem
- MS: Mobile station
- MSC: Mobile switching center
- MSS: Mobile switching subsystem
- OSS: Operational support system
- PLMN: Public land mobile network
- POTS: Plain old telephony system
- PSTN: Public switched telephony network
- SIM: Subscriber identity module
- SM: Substem or application module
- SMS: Short message service
- TMSI: Temporary mobile subscriber identity
- VLR: Visitor location register
- VMSC: A MSC with an intergrated VLR

## Claims

1. Access apparatus to establish access for fixed subscribers to digital cellular communication networks, comprising:
a) fixed/mobile access means (46) adapted to convert mobile-type messages (DTAP) transmitted from a mobile switching centre (MSC) in the digital cellular communication network (GSM) into fixed-type signalling for fixed subscribers (12) and vice versa, and
b) telephone number setup means (DANA) adapted to collect and analyze telephone number digits received from fixed subscribers before forwarding to the mobile switching centre (MSC) in the digital cellular communication network (GSM) for indication of the service to be activated/invoked.

2. Access apparatus according to claim 1, **characterized in that** the fixed/mobile access means (46) is provided for a GSM-type digital cellular mobile network and comprises a
- mapping means (52) adapted to map to/from an analogue subscriber protocol from/to an A-interface standard;
- identification means adapted to identify a relation between an international mobile subscriber identity (IMSI) and a fixed subscriber; and/or
- interface means (56) adapted to implement the A-interface to the mobile switching centre (MSC) in the digital cellular communication network (GSM).

3. Access apparatus according to claim 2, **characterized in that** the mapping means (52) comprises:
- originating basic call and supplementary service mapping means (OBSM) adapted to take care of all mapping functions needed for originating basic and supplementary services;
- terminating basic call and supplementary service mapping means (TBSM) adapted to take care of all mapping functions needed for terminating basic and supplementary services;
- digit analysis means (DANA) adapted to indentify a supplementary service invocation and a call, respectively, and to determine a number length,
- call supervision mapping means (CSM) adapted to take over control of a call when it has reached speech state and to map all supplementary service activations in the speech state, if possible.

4. Access apparatus according to claim 2, **characterized in that** the interface means (56) comprises:
- an A-interface protocol handling means (AIPH) adapted to handle all A-interface related activities except maintenance;
- an A-interface maintenance means (AIMPH) adapted to handle all A-interface related maintenance activities;
- an A-interface device means adapted to integrate all switching terminals towards the mobile switching center (MSC) being connected to the access apparatus;
- a first remote handling means (RMHAIDL) adapted to A-interface down link message disassembly;
- a second remote handling means (RMHAIUL) adapted to A-interface up link message assembly;
- an A-interface maintenance message handling means (AIMMH) adapted to assemble/disassemble maintenance related messages; and/or
- a common channel sub-system distribution and interface means (RABDI) adapted to distribute and interface to signalling connection control part (SCCP).

5. Access apparatus according to one of the claims 1 to 4 **characterized in that** it further comprises fixed/mobile access maintenance means (50) with at least one element taken from a group of command handling means comprising:
- subscriber handling means adapted to register and modify subscriber in a subscriber data base;
- an A-interface and route administration means;
- a digit analysis data definition and modification means; and/or
- node data administration means.

6. Access apparatus according to one of the claims 1 to 5 **characterized in that** it further comprises a fixed/mobile supplementary service means adapted to provide at least one of the following supplementary services to fixed subscribers:
- selection/prioritisation of services;
- call waiting via a call is waiting indication sent to the access apparatus;
- unconditional or conditional call forwarding;
- three/multiparty services;
- connections without dialling and timeout;
- malicious call tracing;
- don't disturb service;
- absent subscriber service;
- call barring service;
- call completion to busy subscriber (CCBS);
- call completion on no reply (CCNR);
- advice of charge; and/or
- closed user group, respectively.

7. Access apparatus according to one of the claims 1 to 6 **characterized in that** it further comprises echo cancellers to remove echos genereated at a fixed line to fixed subscribers.

8. Access apparatus according to one of the claims 1 to 7 **characterized in that** it further comprises an authentication means (48) to verify an unique key per fixed-typed subscription.

9. Access apparatus according to one of the claims 1 to 8 **characterized in that** it is realized on top of a module resource platform.

10. Digital cellular communication network, comprising:
a) a gateway switching centre (GMSC) adapted to connect the cellular communication network to other networks (PSTN; ISDN), further to determine a location of a subscriber (MS, FS) in the cellular communication network, and to route calls towards the subscriber (MS, FS), respectively,
b) a mobile switching centre (MSC) being connected to the gateway switching centre (GMSC) and adapted to perform necessary switching to subscribers that are located in the area covered by the mobile switching centre (MSC) and further to monitor these subscribers,
c) a home location data base (HLR) adapted to store permanent subscriber information and output this permanent subscriber information to the mobile switching center (MSC),
d) a visitor location data base (VLR) being connected to the mobile switching centre (MSC) to dynamically store temporary subscriber location information and output this temporary subscriber information to the mobile switching centre (MSC), wherein
e) an access node (FMAN 10) serves to connect at least one fixed terminal subscriber unit (12) to the mobile switching centre (MSC) so that fixed subscribers are provided with the same services as mobile subscribers.

11. Digital cellular communication network according to claim 10**, characterized in that** it is either of the GSM-type, the PCS-type, the IDC/PDC-type or the cdmaanetype.

12. Digital cellular communication network according to claim 10 or 11, **characterized in that** the mobile switching centre (MSC) comprises an echo canceller activated in accordance with a route from a call destination or call origin.

13. Digital cellular communication network according to one of the claims 10 to 11, **characterized in that** the mobile switching centre (MSC) is adapted to the GSM-standard and comprises an fixed access application module (28) to handle messages transmitted from a V5.x access node or equivalent, or a proprietary access node.

14. Digital cellular communication network according to one of the claims 10 to 13, **characterized in that** the access node (FMAN) is realized according to one of the claims 1 to 10.

15. Method to establish access for fixed subscribers to digital cellular communication networks, comprising the steps:
a) conversion of mobile-type messages (DTAP) transmitted from a mobile switching centre (MSC) in the digital cellular communication network (GSM) into fixed-type signalling for fixed subscribers (12) and vice versa, and
b) collection and analysis of telephone number digits received from fixed subscribers before forwarding to the mobile switching centre (MSC) in the digital cellular communication network (GSM) for indication of the service to be activated/invoked.

16. Method according to claim 15, **characterized in that** the digital cellular mobile network is of the GSM-type and that the step a) divides into
- mapping to/from an analogue subscriber protocol from/to an A-interface standard;
- identifying a relation between an international mobile subscriber identity (IMSI) and a fixed subscriber; and/or
- using the A-interface to the mobile switching centre (MSC) in the digital cellular communication network (GSM) for the exchange of messages.

17. Method according to claim 15 or 16 **characterized in that** it further comprises the step to maintain and modify fixed subscriber-related data.

18. Method according to one of the claims 15 to 17 **characterized in that** it further comprises a step to provide at least one of the following supplementary services to fixed subscribers:
- selection/prioritisation of services;
- call waiting via a call is waiting indication sent to the access apparatus;
- unconditional or conditional call forwarding;
- three/multiparty services;
- connections without dialling and timeout;
- malicious call tracing;
- don't disturb service;
- absent subscriber service;
- call barring service;
- call completion to busy subscriber (CCBS);
- call completion on no reply (CCNR);
- advice of charge; and/or
- closed user group, respectively.

19. Method according to one of the claims 15 to 18 **characterized in that** it further comprises a step to remove echos genereated at a fixed line to fixed subscribers.

20. Method according to one of the claims 15 to 19 **characterized in that** it further comprises a step to verify an unique key per fixed-typed subscription.
